# EUROPEAN PATENT SPECIFICATION

(11) **EP 2 874 951 B1**
(45) Date of publication and mention of the grant of the patent: **27.04.2016**
(21) Application number: 13727914.7
(22) Date of filing: 11.06.2013
(51) Int. Cl.: C02F 1/469

(54) **A METHOD FOR PURIFICATION OF WATER USING CAPACITIVE DEIONISATION**
VERFAHREN ZUR REINIGUNG VON WASSER UNTER VERWENDUNG DER KAPAZITATIVEN DEIONISIERUNG
PROCÉDÉ DE PURIFICATION D'EAU À L'AIDE DE DÉSIONISATION CAPACITIVE

(30) Priority: 23.07.2012 EP 12177445
(43) Date of publication of application: 27.05.2015
(73) Proprietor: Unilever N.V., 3013 AL Rotterdam (NL); Unilever PLC, London, Greater London EC4Y 0DY (GB)
(72) Inventor: GHOSH, Somnath, Whitefield Bangalore 560 066 (IN); RAJANARAYANA, Venkataraghavan, Whitefield Bangalore 560 066 (IN); RAMANUJAPURAM, Anirudh, Anandampillai, Karnataka Bangalore 560011 (IN); ALENCHERRY, Tinto, Johnichan, Whitefield Bangalore 560 066 (IN)
(74) Representative: van den Brom, Coenraad Richard
(86) International application number: PCT/EP2013/062008
(87) International publication number: WO 2014/016038

(56) References cited:
- WO-A1-2011/138663
- US-B1- 6 413 409
- OREN ET AL: "Capacitive deionization (CDI) for desalination and water treatment - past, present and future (a review)", DESALINATION, ELSEVIER, AMSTERDAM, NL, vol. 228, no. 1-3, 15 August 2008 (2008-08-15), pages 10-29, XP022735169, ISSN: 0011-9164, DOI: 10.1016/J.DESAL.2007.08.005 [retrieved on 2008-06-18]
- DERMENTZIS K ET AL: "Continuous capacitive deionization-electrodialysis reversal through electrostatic shielding for desalination and deionization of water", ELECTROCHIMICA ACTA, ELSEVIER SCIENCE PUBLISHERS, BARKING, GB, vol. 53, no. 24, 15 October 2008 (2008-10-15), pages 7123-7130, XP023438208, ISSN: 0013-4686, DOI: 10.1016/J.ELECTACTA.2008.05.026 [retrieved on 2008-07-30]

## Description

### TECHNICAL FIELD

The present invention relates to method for desalination of water by using capacitive deionisation.

### BACKGROUND AND RELATED ART

Various technologies are available for purification of water. These include ultraviolet (UV) based filters, use of chemical purification agents like hypochlorite salts and membrane based filtration methods. These however do not provide deionisation. Methods such as distillation, reverse-osmosis, capacitive deionisation and ion-exchange resins are meant for deionisation.

Deionisation is useful if water contains more dissolved solids, often indicated as TDS (Total Dissolved Solids). Water purifiers that deionise water generally have pre-set levels for reduction of TDS, which means that when the TDS reduction is below the pre-set level, the water is not allowed to be consumed. For this purpose, commercial purifiers have in-line detectors like conductivity meters to continuously monitor the output TDS level. The pre-set levels are usually decided on the basis of the TDS of input water as well as the preferred taste of drinking water.

In the case of capacitive deionisation, water flows through one or more pair of oppositely charged electrodes and as the water flows, the ions present in the water get attracted to the electrodes and thereby get adsorbed on their surface thereby reducing TDS from feed water. Adsorption is a surface phenomenon which is limited by the available surface area of the electrodes.

To increase the adsorption, generally a series of steps is followed which includes, in sequence; short-circuiting the electrodes, reversal of polarity and one or more further steps of short-circuiting.

Short-circuiting leads to equalisation or neutralisation of charges built up on the electrodes during the adsorption thereby allowing the adsorbed ions to pass into the bulk of the untreated water. Reversal of polarity leads to substantial repulsion of the ions from the electrodes and causes movement of the ions to the bulk of the liquid so that the electrodes are regenerated for subsequent use. The subsequent short-circuiting steps provide desorption of the residual ions from the surface of the electrodes thereby making them ready for further use.

Commercial water purifiers which work on the principle of capacitive deionisation usually contain a stack of electrodes which are cyclically charged and discharged.

However, performance of electrodes generally declines over a period. The pre-set standard of TDS reduction becomes difficult to maintain as the ions are deposited on the electrodes. Therefore, deposition of ions affects the usable life of the electrodes. However consumers prefer electrodes having longer life.

WO00/14304 A1 (ANDELMAN MARC et.al) discloses use of positive potentials and shorting in a cyclic manner which is interjected with reversal of potential after a few cycles.

WO01/13389 A1 (ANDELMAN MARC) discloses the benefit of applying positive and negative potential within the same cycle for cleaner electrodes. A cycle is made of one charging step and a discharging step and the polarities of the electrodes are reversed after certain number of cycles.

A limitation of the process disclosed in the cited applications is that in spite of reversing the polarity after certain number of cycles, the usable life of the electrodes still remains short which necessitates frequent interventions.

US6413409B1 (Biosource INC, 2002) discloses a liquid being treated/purified by passing through a capacitor. The method also involves a series of steps and in one such method is disclosed a series of four repeating steps. The steps are charging, short-circuiting or discharge, reverse connection followed by short circuit again. No particular technical unexpected technical effect is attributed to the series of steps.

### SUMMARY OF THE INVENTION

Disclosed is a method of deionising water by capacitive deionisation comprising repeating series of cycles during which water is passed through at least one pair of oppositely charged electrodes, each cycle comprising:
(i) a charging step;
(ii) a first short-circuiting step;
(iii) a discharging step consisting of reversal of the applied charge on the electrodes; and
(iv) a second short-circuiting step,
wherein
polarity applied to each electrode in each pair of oppositely charged electrodes during charging step of a given repeating series of cycles is reversed during the charging step of the immediately following series of repeating cycles and wherein each said series comprises 10 to 20 cycles.

Details of the invention will now be explained.

### DETAILED DESCRIPTION

Capacitive deionisation is a newer technology for deionisation of brackish water TDS of 500 to 3000 ppm. The working principle is electro-sorption or electroadsorption where ions present in water are adsorbed on electrodes under the influence of applied electric field. A typical cycle of capacitive deionisation has two steps, a purification step and a regeneration step.

In the purification step, positive and negative charges are applied across the electrodes and the counter-ions present in water are attracted towards an oppositely charged electrode. This effect causes reduction in the amount of ions in the water.

In the regeneration step, the charge on the electrodes is reversed (or the electrodes are short-circuited). In this step, ions get desorbed from the electrodes and pass into the flowing water due to the electrostatic repulsion. During this step, there is a greater amount of ions in the water. Such water is generally not fit for consumption therefore commercial devices have built-in mechanisms to discard or reject the water.

The performance of any capacitive deionisation system can be measured by two parameters.

The first parameter is optimal removal of total dissolve solids. The second parameter is called "recovery" which is defined as the ratio of purified water to the total intake of water. A better device or method is one in which the recovery is as high as possible, which means that more water is purified.

This has now been achieved by a method in which the charge applied to each electrode in each pair of oppositely charged electrodes during the charging step of a given series of repeating cycles is reversed during the charging step of the immediately following series of repeating cycles where each series has 10 to 20 cycles and each cycle has four steps.

### The cycle

The disclosed method of purification of water has repeating series of cycles during which input water is passed through at least one pair of oppositely charged electrodes, each cycle has:
(i) a charging step;
(ii) a first short-circuiting step;
(iii) a discharging step consisting of reversal of the charges on the electrodes; and
(iv) a second short-circuiting step.
In comparison, in the known method, each cycle is made of only two steps; a charging step and a discharging step.

Reversal of applied polarity before ten cycles makes the process inefficient. This is because after changing of polarity the system takes some few cycles (termed as waste cycles) to stabilise and perform to its maximum efficiency. Therefore if the reversal of polarity is done frequently then number of waste cycles is higher which would render the process inefficient. Reversal of applied charges after twenty cycles would not produce the desired effect as the electrodes would by then have adsorbed significant amount of ions.

In the charging step, ions which are present in input water get adsorbed to the surface of the electrodes. In a preferred method, duration of the charging step is for 1 to 25 minutes, more preferably 6 to 18 minutes, further more preferably 12 to 18 minutes. This duration for each step depends on the type of electrodes, the material of their construction, their dimensions, the applied voltage and the TDS of water which is to be treated.

The first short-circuiting step helps to equalize or neutralize the charges adhering to the electrodes so that the ions can pass into the bulk of the water. In a preferred method, duration of the first short-circuiting step is 2 to 60 seconds, more preferably 8 to 15 seconds and most preferably 10 to 15 seconds.

We have determined that even after the first short-circuiting step, some ions may remain adhering, among other reasons, due to no specific driving force for desorption. This is achieved by the discharging step consisting of reversal of the applied charge on the electrodes for a brief period which helps release the ions adsorbed by the residual charge of the electrodes. Such ions are then readily released by the repulsive electric forces.

This step also helps regenerate the electrodes for further use. In a preferred method, duration of the discharging step is 5 to 20 seconds, more preferably 8 to 15 seconds and most preferably for 8 to 15 seconds.

The second short-circuiting step helps further neutralize residual charges. In a preferred method duration of the second short-circuiting step is for 4 to 20 minutes, more preferably for 12 to 18 minutes. This step further drives the ions away from the electrodes to the bulk of the water.

### Electrodes

Capacitive deionisation utilizes electrodes as a medium for electrosorption of ions to reduce the total dissolved solids in water. Higher TDS water lends an unpalatable taste to water.

As explained earlier, the water is passed through at least one pair of oppositely charged electrodes. Several different types of electrodes are known. Any particular electrode can be chosen to suit the requirements.

Electrodes can be made from various types of materials. The most popular and preferred material is activated carbon, preferably obtained from bituminous coal, coconut shell, wood or petroleum tar. It is preferred that surface area of the activated carbon is greater than 500 m²/g, more preferably greater than 1000 m²/g. Preferably size uniformity co-efficient of the activated carbon is less than 2, more preferably less than 1.5. It is preferred that carbon tetrachloride number of the activated carbon is greater than 50 %, more preferably greater than 60 %. Iodine value of the activated carbon is preferably greater than 800, more preferably it is greater than 1000. It is preferred that particle size of the activated carbon is 75 to 300 µm, more preferably from 100 to 250 µm.

Modified forms of activated carbon including carbon cloth, carbon felt, carbon aerogel and carbon modified with metals can also be used in place of or in addition to activated carbon.

A binder, usually an organic binder is used to bind the electrode, e.g. carbon particles so that an electrode can be formed. A thermoplastic binder is preferred. Further preferably, a binder having melt flow rate (MFR) lower than 5 g/10 minutes. Yet further preferably the MFR is lower than 2 g/10 minutes and optimally it is less than 1 g/10 minutes. The melt-flow rate (MFR) is generally measured using ASTM D 1238 (ISO 1133) test. It is preferred that bulk density of the binder is up to 0.6 g/cm³ more preferably up to 0.5 g/cm³ and further more preferably up to 0.25 g/cm³.

Examples of suitable binders include ultra high molecular weight polyethylene, polypropylene and combinations thereof with molecular weight of about 106 to 109 g/mole. Binders of this class are commercially available under the trade names Hostalen^{®} from Ticona GMBH, GUR^{®}, Sunfine^{®} (from Asahi, Japan), and Hizex^{®} (from Mitsubishi). Other suitable binders include LDPE sold as Lupolen^{®} (from Basel Polyolefins) and LLDPE from Qunos (Australia). It is preferred that the thermoplastic binder is not fibrillated.

It is preferred that particle size of the thermoplastic binder is 20 to 60 µm, more preferably 40 to 60 µm. It is preferred that the thermoplastic binder makes up for 8 to 30 %, more preferably 10 to 30 %, further more preferably 12 to 28 % by weight of the electrode.

A conductive material, especially and preferably conductive form of carbon black is generally used for making the electrodes. This carbon black is a form of elemental carbon. In order to select a suitable form of carbon black for the electrodes, the total surface area, the mesoporous surface area, the structure and the surface oxidation needs to be considered.

It is preferred that total surface area of the conductive carbon black is greater than 500m²/g. Further preferably, the mesoporous area of the conductive carbon black is greater than 100m²/g, optimally 100 to1000 m²/g. The structure of conductive carbon black is characterized by its Oil Absorption Number (OAN). Commercially available carbon black has OAN of 45 to 400 cc/100 g. It is preferred that the Oil Absorption Number (OAN) of the conductive carbon black is 100 to 400 cc/100 g, most preferably 250 to 400 cc/100 g.

Preferred grades of conductive carbon black include Timcal^{®} Graphite 5 Carbon (Grades: Ensaco^{®} 250G, Ensaco^{®} 350) or from Cabot Corporation (Grades: Regal, Black Pearl 2000, Vulcan), or from EVONOVIK (Grade: PRINTEX^{®} XE-2), or from AKZO NOBEL (Ketjen Black).

A preferred composition for an electrode includes activated carbon, thermoplastic binder and conductive carbon black which preferably is moulded onto a graphite sheet by heat treatment process. A detailed account of electrodes can be found in WO2009/077276 A1 (Unilever). Preferably the ratio of activated carbon to said binder is 1:1 to 20:1 and the ratio of said activated carbon to conductive carbon black is 1:1 to 10:1.

In order to use the electrodes, they are usually cut to required size. This size depends on the size of the corresponding capacitive deionisation cell in which the electrodes are assembled. Usually the electrodes are assembled in order of pairs, such as 11 pairs, 13 pairs upto preferably 25 pairs. Beyond 25 pairs, the hydraulic resistance becomes too high leading to higher pressure drop. Second reason is there is some lag between the charging cycle and the water to come out of the cell because the path length is too high. In a preferred method, water is passed through 8 to 25 pairs of electrodes. It is normally the case that of the total number of electrodes, a sizeable number is double sided electrodes and most often when "n" pairs of electrodes are used; the number of double sided pairs is "n-1" leaving the balance one pair to be used as single sided electrodes, which, in an assembly or stack, are placed one each as the terminal electrodes.

It is particularly preferred that of all the pairs of electrodes, a major portion of the electrodes are double-sided and correspondingly a minor portion of the electrodes are single-sided.

While it is preferred that in the present method the electrodes are arranged in parallel, they could also be arranged in series.

It is preferred that thickness of each double-sided electrode is 1 to 6 mm preferably 2 to 5 mm and more preferably 3 to 4 mm. It is preferred that thickness of each single-sided electrode is 1 to 3 mm.

A non-conducting material, such as nylon cloth, is used to prevent direct contact between the electrodes. It is particularly preferred that gap between two adjacent electrodes is 1 mm or lower.

### Capacitive deionisation cell

The electrodes are assembled to get a cell. The disclosed method is followed by using a capacitive deionisation cell. Usually in such a cell a pair of electrodes is connected to respective positive and negative potential. An enclosure surrounds the capacitive deionisation cell and has provision for water to flow in and out of the cell. The enclosure also provides for and makes connections externally to the electrodes in the cell.

### Feeding input water to the cell

Any known means may be used for input of water into the cell. Water is generally fed through a reservoir or by an inline source of water and a pump. The feed water stored in the reservoir is fed into the capacitive deionisation cell or the capacitive deionisation cell is connected to a direct source of water such as a tap. A pump delivers water from the reservoir or the inline source into the capacitive deionisation cell. Known pumps deliver water at a flow rate of 1 to 1500 ml/minute, more preferably 10 to 300 ml/min. More common flow rates are about 55 ml/minute to 110 ml/minute. Suitable means for pre-filtering the feed water for removal of organics and particulates is preferably adopted.

### Power Supply

A power supply is necessary to practice the disclosed method. Power can be supplied by any means. However it is preferred that power is supplied by a programmable DC power supply system for supplying DC voltage and for applying pre-programmed timed steps like short-circuiting, charging and discharging. It is preferred that the voltage applied across the electrodes during the charging step is 0.1 to 10 V, more preferably from 0.8 to 8 V and still more preferably from 1.0 to 6 V. In the discharging step, when the charges on the electrodes are reversed, albeit only for a brief period, preferred voltage is -0.1 to -10 V more preferably from -0.8 to - 8 V and still more preferably from -1.0 to - 6 V.

### Measuring the TDS

A conductivity meter is used to measure the concentration of salts in water and with suitable electronic programs, the TDS is thereby calculated. Preferably two such meters are used. A first conductivity meter located before the capacitive deionisation cell measures the concentration of the salts in the input water. A second conductivity meter located after the cell measures concentration of the salts in output water. This second conductivity meter is connected to an electronic processor. The electronic processor receives electrical signal from the conductivity meter and it converts the electrical signal from the conductivity meter into TDS. It is preferred that conductivity is measured at regular intervals of e.g. 1 second, which can be controlled by the electronic processor. Output water having TDS greater than a certain level is generally considered not fit for consumption. In order to provide a means for controlling the output of water, a solenoid valve is generally used in capacitive deionisation cells.

### Solenoid valve

A solenoid valve is an electromechanically operated valve. The valve is controlled by an electric current through a solenoid. In the case of a two-port valve, the flow is switched on or off and in the case of a three-port valve the outflow is switched between the two outlet ports. Solenoid valves are the most commonly used control elements in fluid flow. Their primary task is to shut off, release, dose or distribute fluids. Solenoids offer fast and safe switching, high reliability, long service life, good compatibility of the materials used, low control power and compact design.

It is preferred that a 3-way solenoid valve is used of which one port is for input of water and other two are for output. It is preferred that the solenoid valve is connected to the conductivity meter having a relay switch. When TDS is above the set value, the flow-through of water is normally closed and the water comes from an output port which is direct with input port. When the TDS is lowered below the pre-set point, the relay switch is turned on and the current flows to the solenoid valve which then switches the flow path to another port.

The electronic processor controls the opening of the specific port of the solenoid valve based on the measured input and output TDS levels and the pre-determined pre-set points for TDS. It is preferred that the TDS of water before deionisation is 700 to 800 ppm but the TDS could vary depending on the source of water. It is preferred that the TDS is lowered to at least 30 % from its initial level after deionisation, e.g. reduction from 100 ppm to 30 ppm. TDS is a function of the ions in water. These ions are removed by the electrodes. The life of every electrode is limited.

If the percentage TDS removal falls below 30%, i.e. removal by 30%, then it may not be worthwhile continuing the process and using the electrodes without intervention. In other words, if the input TDS is 100 ppm and the output TDS is above 70 ppm, the electrodes need intervention.

It is preferred that the pre-set value specifying the upper limit of TDS is 500 ppm. More preferably the value is 300 ppm. A drastic reduction in TDS so as to completely remove dissolved salts is not desirable. Water devoid of dissolved solids usually tastes bland. Therefore, the lower pre-set point is 150 ppm. This means that there will be minimum 150 ppm TDS in the output water.

### Step(s) to further improve the usable life of electrodes:

It is usually observed that the usable life of capacitive deionisation electrodes reduces over a period as salts get deposited on the electrodes. This lowers the efficiency of the method. It may further lead to technical problems of electrode fouling. Usually the electrodes are treated/washed with chemicals for rejuvenation.

We have now determined that recycling some amount of purified water containing lower amount of TDS back to the capacitive deionisation cell improves the usable life of electrodes. Therefore in accordance with a preferred aspect of the method, a portion of purified water is recycled through the capacitive deionisation cell. Purified water could be recycled by any suitable method, but preferably by reflux and dosing process. It is preferably electronically programmed. Without wishing to be bound by theory it is believed that recycling purified water helps to dissolve any precipitated foulant due to creation of high concentration gradient between the electrode surface and the bulk solution.

Using this step, it is possible to nearly double the usable life of electrodes.

If further necessary, and when the electrodes are fully fouled, the performance of the electrodes may be recovered by washing fouled electrodes with an acid, preferably an acid and more preferably a mineral acid. This could be done for example, by dissembling the electrodes and washing or by flow way of a flow-through system. A 1% solution of acetic acid or hydrochloric acid is preferred. It is also preferable to disconnect the power supply to the electrodes during this step. The acidic solution is preferably passed though cell for about thirty minutes at a flow rate of 110 ml/minute. It is further preferred to wash the electrodes with five litres of water to dissolve all the converted salts and finally with water of about 800 ppm TDS to bring it to neutral pH again.

The invention will now be explained in details with the help of the following nonlimiting examples.

### EXAMPLES

### Example-1: Preparation of preferred carbon electrodes

Preferred carbon electrodes were prepared by wet mixing process followed by thermal anneal. Powdered activated carbon having BET surface area 885 m²/g and conductivity approximately 0.1 S/cm, a high density polyethylene binder, and conductive carbon black having BET surface area of 770 m²/g and conductivity approximately 0.05 S/cm were mixed at ratio of 70:20:10 to form slurry. To prepare a two-sided electrode, the slurry was spread on both sides of a graphite sheet having 0.3 mm thickness and 15 cm diameter. Only one side of the graphite sheet was used to make a single sided electrode. The sheet was subjected to pressure of 25 kg/cm² in a mould and the mould was placed in an oven at 200 °C for 2 hours, allowed to cool to ambient conditions after which the electrodes were removed.

Each double sided electrode was 3.2 mm thick and each single sided electrode was 1.7 mm. The BET surface area of each electrode was 757 m²/g and its conductivity was approximately 0.15 S/cm.

Twelve such electrodes were connected parallel to each other (stacked) with the graphite side facing outwards at the end. A 100 µm thick nylon cloth separator was placed between every two electrodes to prevent electrical short circuit but the cloth allowed for flow of water between the electrodes.

The electrodes stack was cut to a square having dimensions of 10.6 mm X 10.6 mm with the exposed triangular graphite portion of dimensions 15 mm X 15 mm X 20 mm). Triangular graphite connectors which were 5 mm thick and having the dimensions of 15 mm X 15 mm X 20 mm were used to connect alternating electrodes which are connected to power supply via a bus connector. The experiment was conducted on a capacitive deionisation test rig, construction of which will now be explained.

### The capacitive deionisation test rig

A capacitive deionisation test rig was made which includes a CDI cell which in turn contains the disclosed stack of electrodes, a power supply, a peristaltic pump, a conductivity meter, a data logger and a recorder (preferably a computer). The test rig includes a CDI cell. Outer dimensions of the test cell were 138 mm x 138 mm while the inner dimensions were 114 mm x 114 mm. The single CDI cell had 11 pairs of electrodes. In the test cell, the alternating electrodes were connected by graphite connectors and then compressed by a lid such that the gap between the electrodes was less than 1 mm. This is meant for good capacitance.

Inside the capacitive deionisation cell, the flow distribution was arranged in such a way that total volume of water which entered the cell was divided equally between all the electrodes.

The water entered the cell from the bottom and exited from the top of the cell in an in-out configuration. The water was pumped in to the cell by the peristaltic pump whose feed came from a reservoir of water. The cell was connected to a power supply of 780 Watts and the collected data was logged in to a computer. The conductivity of the input and the output water was measured by standard conductivity meters and this data was also fed into the computer.

High TDS water (TDS = 800 ppm) was passed through the electrodes under flow rate of 110 ml/minute. Applied potential of 4.4 V (step (i)) and - 4.4 V (step (iii)) was applied across the electrodes. The pre-set value of TDS reduction was set to at least 30 % reduction.

### Duration:

• Charging step - 16 minutes
• First short-circuiting step - 10 seconds
• Discharging step - 10 seconds
• Second short-circuiting step - 8 minutes

**Table-1**

| No reversal after 20 cycles | | Reversal after 20 cycles | |
|---|---|---|---|
| Water passed/L | TDS reduction (%) | Water passed/L | TDS reduction (%) |
| 35 | 47 | 52 | 50 |
| 91 | 41 | 105 | 46 |
| 150 | 37 | 159 | 42 |
| 204 | 32 | 213 | 39 |
| 258 | 31 | 270 | 38 |
| 366 | 22 | 329 | 38 |
| 377 | 19 | 378 | 36 |
| | | 427 | 35 |
| | | 550 | 30 |

The data in table 1 indicates that in the absence of reversal only 258 litres of water could be purified while meeting the pre-set standard of reduction (at least 30 % reduction). On the other hand, when the disclosed method was followed, almost double the amount of water could be purified. In other words, the results indicate that reversing the applied charge of the electrodes in the charging step leads to significantly higher usable life of the electrodes.

### Example-2

The process of Example-1 was repeated by lowering the flow-rate of water to 55 ml/minute. The data is shown in table-2.

**Table-2**

| No reversal after 20 cycles | | Reversal after 20 cycles | |
|---|---|---|---|
| Water passed/L | TDS reduction (%) | Water passed/L | TDS reduction (%) |
| 6.5 | 70 | 4.2 | 67 |
| 18 | 64 | 11 | 68 |
| 39 | 59 | 43 | 64 |
| 65 | 54 | 75 | 62 |
| 91 | 49 | 103 | 57 |
| 130 | 42 | 130 | 57 |

The data in table-2 indicates that continuation of the method (cycles) without reversing the applied charges on the electrodes leads to inferior performance.

### Example-3: Effect of recycling purified water

An experiment was conducted using an assembly having a stack of eleven pairs of electrodes. Flow rate of water was adjusted to 110 ml/minute at an applied potential of 4.4 V and the TDS of input water was 800 ppm. Five litres of purified water was recycled through the electrodes. This purified water was used to wash the electrodes by pumping the water at the same flowrate of 110 ml/minute through the cell and then the water was discarded. The step was continued until the entire volume of five litres of water was utilized. During this step the power supply was disconnected.

The results are shown in table 3.

**Table-3**

| Volume of water passed (litres) | Control experiment Removal of TDS (%) | Recycling water Removal of TDS (%) |
|---|---|---|
| 51 | 49 | 48 |
| 105 | 46 | 50 |
| 159 | 42 | 48 |
| 213 | 39 | 50 |
| 270 | 38 | 46 |
| 329 | 38 | 45 |
| 378 | 36 | 44 |
| 426 | 35 | 43 |
| 550 | 30 | 41 |
| 1100 | - | 30 |

From the comparative data in table-3 it can be readily seen how the recycle of purified water through the electrodes almost doubles the usable life of electrodes. The electrodes provide water having maximum of 30 ppm TDS for upto 1100 litres as compared to 550 litres in the control experiment.

## Claims

1. A method of deionising water by capacitive deionisation comprising repeating series of cycles during which water is passed through at least one pair of oppositely charged electrodes, each cycle comprising:
(i) a charging step;
(ii) a first short-circuiting step;
(iii) a discharging step consisting of reversal of the applied charge on the electrodes; and
(iv) a second short-circuiting step,
wherein
polarity applied to each electrode in each pair of oppositely charged electrodes during said charging step of a given series of repeating cycles is reversed during the charging step of the immediately following series of repeating cycles and wherein each said series comprises 10 to 20 cycles.

2. A method as claimed in claim 1 wherein duration of said charging step is 1 to 25 minutes.

3. A method as claimed in claim 1 or 2 wherein said duration of said first short-circuiting step is 2 to 60 seconds.

4. A method as claimed in any one of the preceding claims wherein duration of said discharge step in each said cycle is 5 to 20 seconds.

5. A method as claimed in any one of the preceding claims wherein duration of said second short-circuiting step is 4 to 20 minutes.

6. A method as claimed in any one of the preceding claims where water is passed water through 8 to 25 pairs of electrodes.

7. A method as claimed in any one of the preceding claims wherein said electrodes are connected in parallel.

8. A method as claimed in claim 6 or 7 wherein of said pairs of electrodes, a major portion is double-sided electrodes and a minor portion is single-sided electrodes.

9. A method as claimed in any one of the preceding claims wherein said electrodes comprise activated carbon, binder and conductive carbon black.

10. A method as claimed in claim 9 wherein ratio of activated carbon to said binder is 1:1 to 20:1 and the ratio of said activated carbon to said conductive carbon black is 1:1 to 10:1.

11. A method as claimed in any one of the preceding claims 8 to 10 wherein each double-sided electrode is 1 to 6 mm thick.

12. A method as claimed in any one of the preceding claims wherein a portion of purified water is recycled through said capacitive deionisation cell.

13. A method as claimed in claim 12 wherein said water is recycled by reflux and dosing process.

14. A method as claimed in claim 13 wherein said process is electronically programmed.

## Patentansprüche

1. Verfahren zum Entionisieren von Wasser durch eine kapazitive Entionisierung, das das Wiederholen einer Reihe von Zyklen umfasst, während derer Wasser durch wenigstens ein Paar entgegengesetzt geladener Elektroden läuft, wobei jeder Zyklus die folgenden Schritte umfasst:
(i) einen Ladeschritt;
(ii) einen ersten Kurzschlussschritt;
(iii) einen Entladeschritt, der aus einer Umpolung der aufgebrachten Ladung auf den Elektroden besteht; und
(iv) einen zweiten Kurzschlussschritt,
wobei
die Polarität, die bei beiden Elektroden in jedem Paar entgegengesetzt geladener Elektroden während des Ladeschritts einer gegebenen Reihe von Wiederholungszyklen aufgebracht wird, während des Ladeschritts der unmittelbar darauffolgenden Reihe von Wiederholungszyklen umgepolt wird und wobei jede der Serien 10 bis 20 Zyklen umfasst.

2. Verfahren nach Anspruch 1, wobei die Dauer des Ladeschritts 1 bis 25 Minuten beträgt.

3. Verfahren nach Anspruch 1 oder 2, wobei die Dauer des ersten Kurzschlussschritts 2 bis 60 Sekunden beträgt.

4. Verfahren nach irgendeinem der vorhergehenden Ansprüche, wobei die Dauer des Entladeschritts in jedem Zyklus 5 bis 20 Sekunden beträgt.

5. Verfahren nach irgendeinem der vorhergehenden Ansprüche, wobei die Dauer des zweiten Kurzschlussschritts 4 bis 20 Minuten beträgt.

6. Verfahren nach irgendeinem der vorhergehenden Ansprüche, wobei Wasser durch 8 bis 25 Paare von Elektroden läuft.

7. Verfahren nach irgendeinem der vorhergehenden Ansprüche, wobei die Elektroden parallel geschaltet sind.

8. Verfahren nach Anspruch 6 oder 7, wobei bei jedem Paar Elektroden ein größerer Anteil zweiseitige Elektroden sind und ein kleinerer Anteil einseitige Elektroden sind.

9. Verfahren nach irgendeinem der vorhergehenden Ansprüche, wobei die Elektroden Aktivkohle, Bindemittel und leitfähigen Ruß umfassen.

10. Verfahren nach Anspruch 9, wobei das Verhältnis von Aktivkohle zu Bindemittel 1:1 bis 20:1 beträgt und wobei das Verhältnis von Aktivkohle zu leitfähigem Ruß 1:1 bis 10:1 beträgt.

11. Verfahren nach irgendeinem der vorhergehenden Ansprüche 8 bis 10, wobei jede zweiseitige Elektrode 1 bis 6 mm dick ist.

12. Verfahren nach irgendeinem der vorhergehenden Ansprüche, wobei ein Anteil des gereinigten Wassers durch die kapazitive Entionisierungszelle rückgeführt wird.

13. Verfahren nach Anspruch 12, wobei Wasser mittels eines Rücklauf- und Dosierungsvorgangs rückgeführt wird.

14. Verfahren nach Anspruch 13, wobei der Vorgang elektronisch programmiert ist.

## Revendications

1. Procédé de désionisation d'eau par désionisation capacitive comprenant des séries de cycles répétés pendant lesquelles de l'eau passe à travers au moins une paire d'électrodes chargées de manière opposée, chaque cycle comprenant :
(i) une étape de charge ;
(ii) une première étape de court-circuit ;
(iii) une étape de décharge consistant en l'inversion de la charge appliquée sur les électrodes ; et
(iv) une seconde étape de court-circuit,
dans lequel
une polarité appliquée à chaque électrode dans chaque paire d'électrodes chargées de manière opposée pendant ladite étape de charge d'une série donnée de cycles répétés est inversée pendant l'étape de charge de la série suivant immédiatement de cycles répétés et dans lequel chacune desdites séries comprend de 10 à 20 cycles.

2. Procédé selon la revendication 1, dans lequel la durée de ladite étape de charge est de 1 à 25 minutes.

3. Procédé selon la revendication 1 ou 2, dans lequel ladite durée de ladite première étape de court-circuit est de 2 à 60 secondes.

4. Procédé selon l'une quelconque des revendications précédentes, dans lequel la durée de ladite étape de décharge dans chaque dit cycle est de 5 à 20 secondes.

5. Procédé selon l'une quelconque des revendications précédentes, dans lequel la durée de ladite seconde étape de court-circuit est de 4 à 20 minutes.

6. Procédé selon l'une quelconque des revendications précédentes, dans lequel l'eau est de l'eau qui est passée à travers de 8 à 25 paires d'électrodes.

7. Procédé selon l'une quelconque des revendications précédentes, dans lequel lesdites électrodes sont connectées en parallèle.

8. Procédé selon la revendication 6 ou 7, dans lequel parmi lesdites paires d'électrodes, une portion majeure est constituée d'électrodes à côté double et une portion mineure est constituée d'électrodes à côté unique.

9. Procédé selon l'une quelconque des revendications précédentes, dans lequel lesdites électrodes comprennent du charbon actif, un liant et du noir de carbone conducteur.

10. Procédé selon la revendication 9, dans lequel le rapport de charbon actif audit liant est de 1:1 à 20:1 et le rapport dudit charbon actif audit noir de carbone conducteur est de 1:1 à 10:1.

11. Procédé selon l'une quelconque des revendications 8 à 10 précédentes, dans lequel chaque électrode à côté double est d'une épaisseur de 1 à 6 mm.

12. Procédé selon l'une quelconque des revendications précédentes, dans lequel une portion d'eau purifiée est recyclée à travers ladite cellule de désionisation capacitive.

13. Procédé selon la revendication 12, dans lequel ladite eau est recyclée par un procédé de reflux et de dosage.

14. Procédé selon la revendication 13, dans lequel ledit procédé est électroniquement programmé.
